Europäisches Patentamt

**European Patent Office**

**Office européen des brevets**

(11) Numéro de publication: **0 120 538**
A1

## (12) DEMANDE DE BREVET EUROPEEN

(21) Numéro de dépôt: **84200403.8**

(22) Date de dépôt: **21.03.84**

(51) Int. Cl.³: **H 02 P 5/16**

(30) Priorité: **25.03.83 FR 8304910**

(43) Date de publication de la demande:
**03.10.84 Bulletin 84/40**

(84) Etats contractants désignés:
**DE FR GB**

(71) Demandeur: **R.T.C. LA RADIOTECHNIQUE-COMPELEC**
Société anonyme dite:
**51 rue Carnot BP 301**
**F-92156 Suresnes Cédex(FR)**

(84) Etats contractants désignés:
**FR**

(71) Demandeur: **N.V. Philips' Gloeilampenfabrieken**
**Groenewoudseweg 1**
**NL-5621 BA Eindhoven(NL)**

(84) Etats contractants désignés:
**DE GB**

(72) Inventeur: **Remery, Michel**
**SOCIETE CIVILE S.P.I.D. 209, rue de l'Université**
**F-75007 Paris(FR)**

(74) Mandataire: **Pinchon, Pierre et al,**
**Société Civile S.P.I.D. 209 rue de L'Université**
**F-75007 Paris(FR)**

(54) **Dispositif pour alimenter un moteur à courant continu au moyen d'un courant alternatif redressé, avec protection contre les surintensités.**

(57) Dans un système d'alimentation de moteur à angle d'ouverture de courant variable on prévoit deux circuits, le premier (1) fournissant un angle d'ouverture d'autant plus grand que la vitesse du moteur est faible devant la vitesse désirée, et le deuxième (2) fournissant un angle d'ouverture qui au contraire décroît avec la vitesse du moteur, la priorité étant donnée au deuxième circuit pour réduire l'angle d'ouverture.

FIG.1

EP 0 120 538 A1

"Dispositif pour alimenter un moteur à courant continu au moyen d'un courant alternatif redressé, avec protection contre les surintensités".

L'invention concerne un dispositif pour alimenter un moteur à courant continu à aimants permanents au moyen d'un courant alternatif redressé.

Des moteurs à courant continu à aimants permanents, de faible puissance, sont utilisés dans un grand nombre d'applications domestiques, par exemple dans des machines à laver, des robots de cuisines, aspirateurs, etc... Ils peuvent aussi être utilisés dans des applications semi-professionnelles, par exemple dans les petites machines-outils, et notamment des perceuses. Dans toutes ces applications, ils sont alimentés, la plupart du temps, par le réseau d'alimentation en courant alternatif. Par ailleurs, il est souvent nécessaire de pouvoir régler la vitesse de rotation du moteur dans une plage assez étendue. Il est bien connu pour cela d'utiliser des redresseurs semiconducteurs commandés dont l'angle de phase d'ouverture du courant est d'autant plus grand que la différence entre la vitesse désirée et la vitesse atteinte par le moteur est grande. Des circuits selon ce principe sont décrits dans les notes d'application du circuit intégré TDA 1085 A fabriqué par la firme Motorola et également dans la demande de brevet européen N° 41 829 qui décrit une application de ce même circuit intégré à un moteur à aimant permanent.

Le problème majeur à résoudre dans l'application de ce système de commande par découpage de phase à des moteurs à aimants permanents est que, lorsqu'on augmente brutalement la vitesse de consigne alors que le moteur tourne lentement, la différence entre la vitesse désirée et la vitesse instantanée du moteur devient très grande, le moteur reçoit des impulsions maximales et celles-ci risquent de produire des courants excessifs pouvant entraîner la démagnétisation des aimants du moteur. Dans le document cité on utilise donc une résitance de faible valeur en série avec le moteur, qui fournit à ses bornes une tension indiquant la valeur du courant qui doit être limité, cette tension étant utilisée dans le circuit intégré pour limiter les impulsions fournies au moteur. Ce dispositif a l'inconvénient qu'une telle résistance qui est insérée dans le circuit principal du moteur, et doit permettre le passage de courants importants est assez coûteuse et de plus nécessite des moyens de connexion pour courants forts, coûteux eux aussi. Il est connu du brevet Français N°1 60 2 126d'utiliser la résistance de chauffage de l'eau d'une machine à laver en tant que résistance série, mais cela ne peut bien entendu pas s'appliquer aux moteurs de robots ou de machines outils.

Le but de la présente invention est donc de fournir un dispositif permettant d'alimenter le moteur sans risquer de courants excessifs et en n'utilisant pas de résistance série.

L'invention est basée sur l'idée de prévoir deux circuits, le premier (connu) fournissant un angle d'ouverture d'autant plus grand que la vitesse du moteur est faible devant la vitesse désirée, et le deuxième fournissant un angle d'ouverture qui au contraire décroit avec la vitesse du moteur, la priorité étant donnée au deuxième circuit pour réduire l'angle d'ouverture.

Un dispositif selon l'invention est notamment remarquable en ce qu'il est muni d'un circuit imposant un angle de phase maximal, indépendant de la vitesse désirée, et en ce que des moyens (47,44) fournissant une grandeur électrique qui est fonction de la vitesse du moteur sont connectés à ce circuit pour agir sur l'angle de phase maximal qu'il permet d'une façon telle que cet angle croît avec la vitesse du moteur. Le dispositif peut également être remarquable en ce que ledit circuit autorise un angle de phase maximal qui, à partir d'une vitesse déterminée du moteur, varie linéairement avec la vitesse du moteur.

Avantageusement il est muni de moyens pour ralentir la croissance de l'angle de phase permis, lors d'un accroissement de la vitesse du moteur.

Dans une forme de réalisation particulièrement intéressante, lesdits moyens fournissant une grandeur électrique fonction de la vitesse sont constitués par un pont de résistances relié aux bornes du moteur, et dont le point milieu est relié au circuit de commande d'angle de phase par une diode.

L'ensemble de ces caractéristiques a pour avantage de permettre l'usage exclusif de composants usuels technologiquement compatibles avec l'ensemble du circuit de commande, le cablage entre le moteur et le circuit de commande étant réduit à deux simples fils.

La description qui va suivre, en regard des dessins annexés décrivant un exemple non limitatif fera bien comprendre comment l'invention peur être réalisée.

La figure 1 représente un bloc diagramme du dispositif complet.

La figure 2 représente l'allure de quelques signaux rencontrés dans le dispositif.

Les figures 3 à 6 représentent des schémas détaillés des blocs de la figure 1.

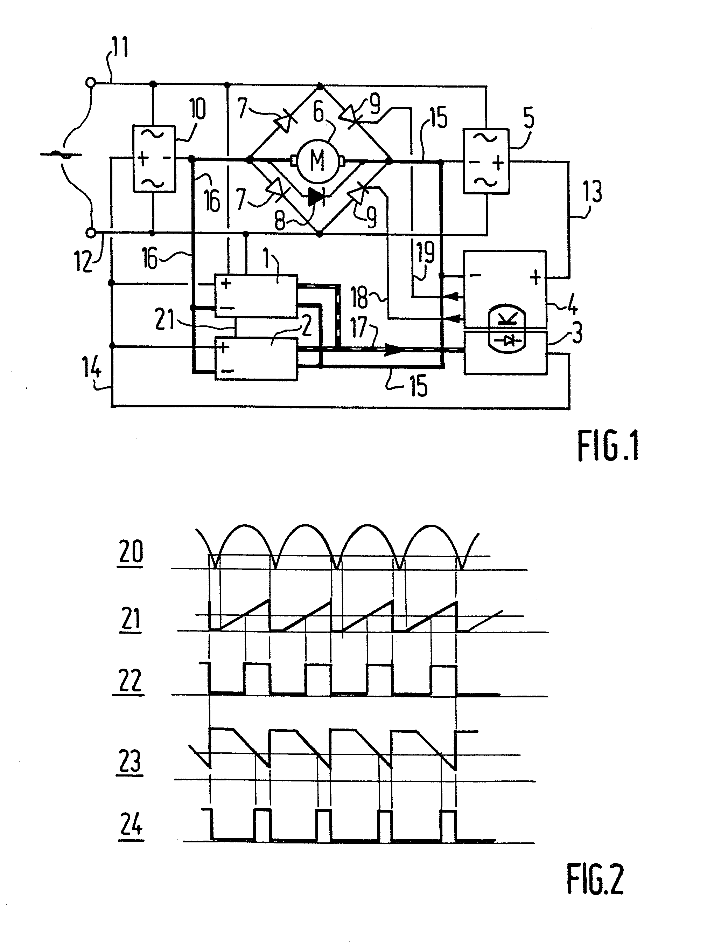

Selon la figure 1 le moteur 6 à aimants permanents est alimenté à partir des lignes 11, 12 d'alimentation en courant alternatif du réseau au moyen d'un pont redresseur constitué de deux diodes 7 et de deux thyristors 9. Une diode 8 de protection évite les surtensions à la coupure du courant fourni par le pont.

Des impulsions de déclenchement sont fournies aux gachettes des thyristors par les conducteurs 18 et 19, en provenance d'un circuit bloc 4 de mise en forme d'impulsions.

Le dispositif comporte deux alimentations 5,10 fournissant sur des connexions respectivement 13, 14 des

4

tensions continues positives référencées respectivement à la tension de la borne + du moteur (connexion 15) et à celle de la borne - (connexion 16).

Un réglage de la vitesse de rotation du moteur est rendu possible grace au circuit 1 de réglage de vitesse qui commande l'angle de phase d'ouverture du courant dans les thyristors 9, cet angle étant d'autant plus grand que la différence entre la vitesse désirée et la vitesse atteinte par le moteur est grande.

Ce circuit 1 envoie par la connexion 17 des signaux de commande aux circuits de mise en forme et d'isolement 4, 3 qui fournissent des impulsions aux gachettes des thyristors.

Un circuit de sécurité 2 impose un angle de phase maximal indépendant de la vitesse désirée, et comporte desmoyens fournissant une grandeur électrique qui est fonction de la vitesse du moteur pour agir sur l'angle de phase maximal permis d'une façon telle que cet angle croît avec la vitesse du moteur.

Il envoie des signaux de commande aux circuits de mise en forme et d'isolement (4, 3) par la connexion 17, déjà utilisée par le circuit 1.

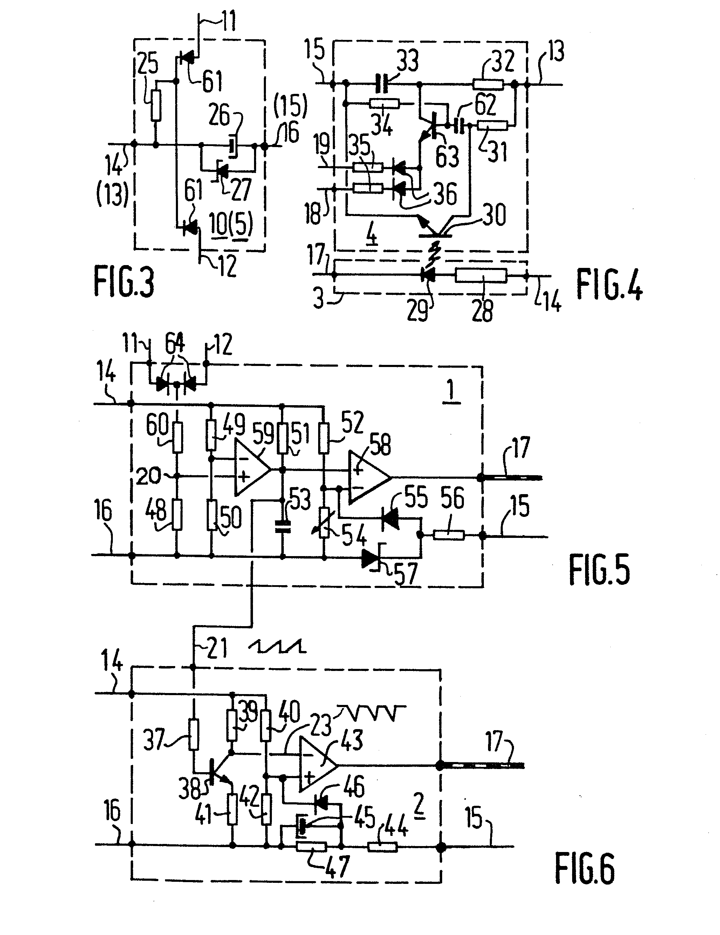

La figure 3 représente en détail le schéma des alimentations 10 et 5, qui sont semblables.

Lorsqu'une référence est différente pour les alimentations 10 et 5, elle est indiquée entre parenthèses pour ce qui concerne l'alimentation 5. Deux diodes 61 ont leurs anodes reliées chacune à une des lignes du réseau 11, 12. Leurs cathodes sont reliées ensemble et via une résistance 25 à une connexion 14 (13) et à la cathode d'une diode zener 27 et à la borne + d'un condensateur chimique 26 de filtrage. L'anode de la diode zener 27 et la borne du condensateur 26 sont reliées à une connexion 16 (15).

La figure 4 représente le circuit d'isolement 3 et le circuit de mise en forme d'impulsions 4. Le circuit 3 est constitué d'une diode électroluminescente 29 connectée dans le sens passant entre les connexions 14 et 17 déjà citées, via une résistance série 28.

Le circuit 4 comporte un transistor photosensible 30, bien entendu couplé optiquement à la diode 29, dont l'émetteur est relié à la connexion 15, et le collecteur à la connexion 13 via une résistance 31 et à la base d'un transistor 63 via un condensateur 62. Le collecteur de ce transistor 63 est relié aux connexions 13 et 15 via respectivement une résistance 32 et un condensateur 33. La base du transistor 62 est reliée à la connexion 15 via une résistance 34. L'émetteur du transistor 63 est relié aux gachettes des thyristors 9 (figure 1) par les lignes 18, 19, via une résistance 35 en série avec une diode 36, dans chaque connexion.

Lorsque le courant passe dans la diode 29, le transistor 30 est conducteur et le condensateur 62 se décharge. Lorsque le courant s'arrête dans la diode 29, le transistor 30 se bloque, le courant de charge du condensateur 62, via la résistance 31, alimente la base du transistor 63 et ce dernier devient conducteur, fournissant un courant aux connexions 18, 19 et déclenchant la conductions des thyristors 9 (figure 1).

Le circuit de réglage de vitesse représenté sur la figure 5 comporte, comme dans l'art antérieur, un générateur de dents de scie 51, 53, 59 et un comparateur 58. Les lignes du réseau 11, 12 sont reliées chacune à l'anode d'une diode 64 dont la cathode est reliée à un pont diviseur 60, 48. La tension au point milieu 20 de ce pont qui est représentée (par rapport à la connexion 16) en 20 sur la figure 2 est appliquée à l'entrée + d'un comparateur 59. La tension sur la connexion d'alimentation 14 est également abaissée par le pont 49, 50 et appliquée à l'entrée du comparateur 59. Cette tension est représentée par une ligne horizontale sur le diagramme 20 de la figure 2. La sortie du comparateur 59 est reliée à l'alimentation positive 14 par une résistance 51 et à la connexion 16 par une capacité 53. Tous les comparateurs des schémas ont une sortie à collecteur ouvert, conduisant le courant

vers la connexion 16. Lorsque la tension en arches de sinusoïde du diagramme 20 descend sous la ligne horizontale, le comparateur 59 bascule et décharge la capacité 53. Dans le cas contraire, cette capacité est chargée par la résistance 51 et sa tension augmente progressivement. Cette tension en dents de scie, avec une dent par alternance de la tension du réseau, est représentée en 21 sur la figure 2. Elle est fournie à l'entrée + d'un comparateur 58 pour y être comparée à une tension continue fournie sur son entrée - par un pont de résistance 52, 54, branché entre les connexions 16 et 14 et représentée par une ligne horizontale sur le diagramme 21. La sortie du comparateur 58 est reliée à la connexion 17 c'est à dire à la diode électroluminescente 29. La tension sur la connexion 17 est représentée par le diagramme 22 de la figure 2. La diode est alimentée pendant les paliers bas de ce diagramme, par conséquent les thyristors sont déclenchés au moment où la tension remonte, et ils restent conducteurs pendant les paliers hauts. Plus la tension fournie par le pont diviseur 52, 54 est élevée, plus l'angle d'ouverture des thyristors est réduit. La résistance 54 est variable de façon à pouvoir régler l'angle d'ouverture. Elle comporte avantageusement un talon pour limiter l'angle d'ouverture à, par exemple, 50 % de la période.

La tension aux bornes du moteur est amenée au circuit de réglage de vitesse par les connexions 15 et 16. La résistance variable 54 forme avec une résistance 56 un pont branché entre ces connexions. Pendant les périodes où le moteur est coupé, avant le déclenchement des thyristors, la tension à ses bornes représente la force contre-électromotrice. Plus le moteur tourne vite, plus sa force contre électromotrice augmente, donc plus la tension indiquée avec une ligne horizontale sur le diagramme 21 augmente, ce qui réduit l'angle d'ouverture. Ceci constitue le processus d'autorégulation de la vitesse, celle-ci dépendant donc de la résistance 54 variable, qui détermine le rapport de division du pont 54, 56. La résistance 52 forme aussi, comme décrit plus haut, un pont avec la même résistance 54. Le pont 52, 54 a pour but de fournir une tension non nulle, d'une part lorsque le moteur est arrêté, mais surtout pendant le début des périodes de blocage des thyristors, ou le courant du moteur continue à s'écouler dans la diode 8 (figure 1), et où la tension est inversée aux bornes du moteur : si cette tension inversée était appliquée à l'entrée - du comparateur 58, ceci déclencherait immédiatement la transition vers le niveau haut de sa sortie.

La résistance 52 associée à une diode 55 placée en série dans le pont 54, 56 avec sa cathode reliée à l'entrée-du comparateur 58 et son anode reliée au moteur via la résistance 56, évitent ce phénomène fâcheux.

Une diode zener 57, branchée entre l'anode de la diode 55 et la masse, évite l'application sur l'entrée du comparateur de la tension élevée appliquée au moteur lors des phases de conduction des thyristors. Il va de soi que pendant ces phases de conduction , la tension recueillie sur la connexion 15 n'a plus rien à voir avec la force contre électromotrice, mais comme les thyristors sont alors déjà déclenchés, cela n'a plus d'inconvénient.

La figure 6 montre un deuxième circuit bloc 2 qui, selon l'invention, est associé au circuit 1 pour limiter l'angle d'ouverture. La dent de scie 21 produite dans le circuit 1 est amenée par la connexion 21 à la base d'un transistor 38, via une résistance 37. L'émetteur de ce transistor 38 est relié à la connexion 16 par une résistance 41 et son collecteur est relié à la connexion 14 via une résistance 39, et à l'entrée - d'un comparateur 43. L'entrée + de ce dernier est reliée au point milieu d'un pont résistif 40, 42 branché entre les connexions 14 et 16, et à la cathode d'une diode dont l'anode est connectée au point milieu d'un pont résistif 44, 47 branché entre les connexions 16 et 15.

La dent de scie 21 (figure 2) est inversée par le montage à transistor 38 dont la tension de collecteur est représentée par le diagramme 23. Lorsque la force contre électromotrice est faible ou nulle, la tension à l'entrée + du comparateur 43 est définie par le pont 40, 42 déterminé pour fournir une tension faible, représentée par une ligne horizontale sur le diagramme 23. La tension de sortie du comparateur 43 est alors représentée par le diagramme 24 : l'angle d'ouverture est faible.

Comme les comparateurs ont tous une sortie à collecteur ouvert, il suffit qu'un seul parmi deux (58, 43) soit au niveau bas, c'est à dire écoule un courant vers l'alimentation négative, pour que leurs sorties reliées par la connexion 17 soit au niveau bas. Le diagramme donnant le palier haut le plus court, c'est à dire l'angle le plus faible a donc "priorité" sur les autres. Le circuit 37 à 43 impose donc un angle de phase maximal, indépendant de la vitesse désirée (indépendant de la résistance variable 54). Le pont constitué par les résistances 44 et 47, branché aux bornes du moteur, constitue des moyens fournissant une grandeur électrique fonction de la vitesse du moteur, puisque de même que dans le cas du circuit 1, c'est la force contre-électromotrice du moteur qui lui est appliquée, au moins pendant les périodes où les thyristors doivent être déclenchés. Son point milieu est relié au circuit de commande d'angle de phase (37 à 43) par une diode 46, qui a pour rôle de permettre le démarrage du moteur. En effet, sans cette diode 46, le moteur arrêté imposerait une tension nulle sur l'entrée + du comparateur 43, et l'angle de phase serait nul. Avec le montage décrit, l'angle de phase est fixé par le pont 40, 42 jusqu'à une vitesse déterminée du moteur, correspondant à une tension au point milieu du pont 47, 44 qui atteint et dépasse celle recueillie auparavant au point milieu du pont 40, 42 augmentée de la tension de seuil de la diode 46. Au delà de cette vitesse la tension à l'entrée + du comparateur croît linéairement avec la vitesse, et l'angle d'ouverture déterminé par l'intersection de cette tension et de la dent de scie 23, varie à peu près linéairement avec la vitesse du moteur.

Aux bornes de la résistance 47 est branché un condensateur 45. Celui-ci empêche que la tension appliquée à l'entrée + du comparateur 43 puisse croître rapidement, c'est à dire qu'il ralentit la croissance de l'angle de phase permis, lors d'une accélération du moteur. En outre il empêche les impulsions élevées qui apparaissent lorsque les thyristors sont enclenchés d'être appliquées au comparateur 43.

Un dispositif réalisé avec les valeurs suivantes a donné toute satisfaction à la demanderesse :

Résistances :

$$25 = \begin{cases} 54 \text{ K}\Omega \text{ (circuit 5)} \\ 14 \text{ K}\Omega \text{ (circuit 10)} \end{cases}$$

$28 = 4{,}7 \text{ K}\Omega$

$31 = 10 \text{ K}\Omega$

$32 = 100 \text{ K}\Omega$

$34 = 27 \text{ K}\Omega$

$35 = 100 \ \Omega$

$37 = 100 \text{ K}\Omega$

$39 = 47 \text{ K}\Omega$

$40 = 39 \text{ K}\Omega$

$41 = 22 \text{ K}\Omega$

$42 = 47 \text{ K}\Omega$

$44 = 270 \text{ K}\Omega$

$47 = 68 \text{ K}\Omega$

$48 = 12 \text{ K}\Omega$

$49 = 27 \text{ K}\Omega$

$50 = 5{,}6 \text{ K}\Omega$

$51 = 100 \text{ K}\Omega$

$52 = 47 \text{ K}\Omega$

$54 = 10 \text{ K}\Omega$

$56 = 20 \text{ K}\Omega$

$60 = 150 \text{ K}\Omega$

Condensateurs :

$$26 = \begin{cases} 10 \ \mu F \text{ (circuit 5)} \\ 100 \ \mu F \text{ (circuit 10)} \end{cases}$$

$33 = 0{,}1 \ \mu F$

$45 = 20 \ \mu F$

$53 = 0{,}22 \ \mu F$

$62 = 1{,}5 \text{ nF}$

Diodes :

$7 = $ BY 229

$8 = $ BY W 95 C

$27 = $ BZ X 79 C 24

$36, 46, 55 = 1$ N 4148

$57 = $ BZ X 79 C 20

$64, 61 = $ 1N 4007

Photocoupleur :

$29, 30 = $ CN X 62

Transistors :

$38, 63 = $ BC 548 B

Comparateurs :

$43, 58, 59 = $ LM 339

Thyristors 9 : C 122 Moteur : "Polymotor" à aimants permanents. 22 volts, 65 watts, à 920 T/mn. 200 volts, 200 watts, à 7000 T/mn.

Il va de soi que certaines formes de réalisations décrites dans cet exemple peuvent être remplacées par d'autres sans sortir du cadre de l'invention. On peut par exemple remplacer les diodes 7 et thyristors 9 par un pont redresseur de diodes simples, et placer un triac en série avec l'ensemble. On peut aussi remplacer le circuit utilisant la force contre électromotrice pour mesurer la vitesse, par un dispositif tachymétrique tel qu'une dynamo couplée au moteur, et utiliser sa tension pour commander les circuits 1 et 2. Toutefois la disposition décrite ci-dessus est plus économique.

REVENDICATIONS :

1/ Dispositif pour alimenter un moteur à courant continu (6) à aimants permanents au moyen d'un courant alternatif redressé, dispositif autorisant un réglage de la vitesse de rotation du moteur au moyen de redresseurs semiconducteurs commandés (9) dont l'angle de phase d'ouverture du courant est d'autant plus grand que la différence entre la vitesse désirée et la vitesse atteinte par le moteur est grande, caractérisé en ce qu'il est muni d'un circuit (37-43) imposant un angle de phase maximal, indépendant de la vitesse désirée, et en ce que des moyens (47,44) fournissant une grandeur électrique qui est fonction de la vitesse du moteur sont connectés à ce circuit pour agir sur l'angle de phase maximal qu'il permet d'une façon telle que cet angle croît avec la vitesse du moteur.

2/ Dispositif selon la revendication 1, caractérisé en ce ledit circuit autorise un angle de phase maximal qui, à partir d'une vitesse déterminée du moteur, varie à peu près linéairement avec la vitesse du moteur.

3/ Dispositif selon l'une des revendications 1 ou 2, caractérisé en ce qu'il est muni de moyens (45) pour ralentir la croissance de l'angle de phase permis, lors d'un accroissement de la vitesse du moteur.

4/ Dispositif selon l'une quelquonque des revendications 1 à 3, caractérisé en ce que lesdits moyens fournissant une grandeur électrique fonction de la vitesse sont constitués par un pont de résistances (44, 47) relié aux bornes du moteur (6), et dont le point milieu est relié au circuit de commande d'angle de phase par une diode (46).

FIG.1

FIG.2

0120538

FIG.3

FIG.4

FIG.5

FIG.6

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl ³) |
|---|---|---|---|
| A | DE-A-1 463 266  (GENERAL ELECTRIC) <br> * Page 5, ligne 11 - page 9, ligne 23; figure 1 * | 1,4 | H 02 P  5/16 |
| A | FR-A-2 402 967  (FUJITSU FANUC LTD.) <br> * Page 10, lignes 1-11; page 5, ligne 35 - page 7, ligne 29; figure 9 * | 1 | |
| A | FR-A-2 224 922  (INTERNATIONAL EQUIPMENT CO.) <br> * Page 2, ligne 7 - page 3, ligne 10; figure 1 * | 1 | |
| A | US-A-3 536 971  (J.D. McMILLEN et al.) <br> * Colonne 2, lignes 1-18; colonne 3, ligne 70 - colonne 4, ligne 49; colonne 7, lignes 68-69; figures 1,5 * | 1 | |

DOMAINES TECHNIQUES RECHERCHES (Int. Cl. ³)

H 02 P  5/00

Le présent rapport de recherche a été établi pour toutes les revendications

| Lieu de la recherche | Date d'achèvement de la recherche | Examinateur |
|---|---|---|
| LA HAYE | 14-06-1984 | WEIHS J.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OFB Form 1503 03 82